# EUROPÄISCHE PATENTSCHRIFT

(11) **EP 0 845 201 B1**
(45) Veröffentlichungstag und Bekanntmachung des Hinweises auf die Patenterteilung: **12.06.2002**
(21) Anmeldenummer: 97119330.5
(22) Anmeldetag: 05.11.1997
(51) Int. Cl.: A01G 1/00

(54) **Vegetationselement**
Vegetation element
Elément de végétation

(30) Priorität: 21.11.1996 DE 19648105
(43) Veröffentlichungstag der Anmeldung: 03.06.1998
(73) Patentinhaber: Behrens, Wolfgang, D-27243 Gross Ippener (DE)
(72) Erfinder: Behrens, Wolfgang, D-27243 Gross Ippener (DE)
(74) Vertreter: Patentanwälte Thömen & Körner

(56) Entgegenhaltungen:
- EP-A- 0 706 753
- DE-A- 4 113 215
- US-A- 3 890 910
- DATABASE WPI Section Ch, Week 9101 Derwent Publications Ltd., London, GB; Class A97, AN 91-004814 XP002081398 & JP 02 283202 A (SUGAWARA KOGYO KK) , 20. November 1990
- PATENT ABSTRACTS OF JAPAN vol. 016, no. 127 (M-1227), 31. März 1992 & JP 03 290524 A (NISSHOKU CORP), 20. Dezember 1991
- PATENT ABSTRACTS OF JAPAN vol. 006, no. 083 (M-130), 21. Mai 1982 & JP 57 021630 A (YAMASHIZU SHOKAI KK), 4. Februar 1982
- PATENT ABSTRACTS OF JAPAN vol. 096, no. 012, 26. Dezember 1996 & JP 08 214688 A (URAYAMA MITSUAKI;MINAMI KANAAMI KOGYO KK), 27. August 1996
- PATENT ABSTRACTS OF JAPAN vol. 004, no. 167 (M-042), 19. November 1980 & JP 55 114712 A (KYOEI DOBOKU KOGAKU KK), 4. September 1980

## Beschreibung

Die Erfindung betrifft ein Vegetationselement gemäß dem Oberbegriff des Patentanspruchs 1.

Vegetationselemente werden in zunehmendem Maße hergestellt und ein bevorzugtes Anwendungsgebiet besteht in ihrer Verwendung zur Begrünung von flachen oder geneigten Dächern sowohl von Wohnhäusern als auch von Industriegebäuden.

Die Vegetationselemente können außerhalb ihres späteren Einsatzortes vorkultiviert werden, bevor sie später auf einem Dach verlegt werden. Zu diesem Zweck werden die Vegetationsträger als mattenförmige Bahnen auf eine Unterlage aufgelegt und auf den Vegetationskörper wird Saatgut aufgebracht. Es folgt dann in gärtnerischer Pflege die Vorkultivierung, bis die Vegetationskörper begrünt sind und als fertiges Vegetationselement zur Verfügung stehen. Die Vegetationselemente lassen sich dann zu Rollen aufrollen und zu einem Dach transportieren, wo sie dann wieder ausgerollt werden. Um eine sichere Handhabung dieser vorgefertigten Vegetationselemente zu erzielen, besitzen sie in aller Regel auf der unteren Seite des Vegetationsträgers eine wasserdurchlässige Trägerschicht aus einem Vlies oder einem grobmaschigen Gittergewebe. Ein solches Vegetationselement ist durch die europäische Patentanmeldung EP 0 706 753 A1 bekannt, wobei der Vegetationsträger durch ein mineralisches Material in Form einer hygroskopischen Steinwollmatte gebildet ist.

Es ist daneben aber auch möglich, eine Begrünung von Dächern direkt vor Ort vorzunehmen und den Vegetationskörper direkt auf dem Dach zu verlegen, wobei in diesem Fall die erwähnte untere Trägerschicht entfallen kann. Auf den Vegetationsträger werden wiederum Saatkörner als Saatgut aufgebracht, und nach einer gewissen Wachstumszeit entsteht auf dem Dach das fertige begrünte Vegetationselement.

Sowohl bei der Vorkultivierung als auch bei einer direkten Begrünung vor Ort ist es bei den Vegetationselementen erforderlich, Saatkörner auf den Vegetationskörper aufzubringen.

In der Praxis werden diese Saatkörner von einer Person von Hand ausgesäht. Dabei ist zu beobachten, daß die Saatkörner häufig sehr ungleichmäßig auf dem Vegetationsträger verteilt sind und daß es Bereiche mit zuvielen Saatkörnern und andere Bereiche mit sehr wenigen Saatkörnern oder auch Leerstellen gibt, an denen keine Saatkörner vorhanden sind. Dies führt zu dem nachteiligen Ergebnis, daß das Vegetationselement ungleichmäßig begrünt ist.

Wenn die die Saatkörner ausbringende Person bemerkt, daß kein gleichmäßiger Auftrag vorliegt, versucht sie, die Leerstellen oder die nur gering mit Saatkörnern versehenen Bereiche durch weiteres Aufbringen von Saatkörnern aufzufüllen. Dies führt im Ergebnis aber dazu, daß insgesamt mehr Saatkörner aufgebracht werden, als es eigentlich für die vorgegebene Fläche des Vegetationselements erforderlich wäre. Als Folge davon wird die Herstellung von Vegetationselementen verteuert.

Durch das Dokument DE 79 35 851 U1, von welchem die Erfindung gemäß dem Oberbegriff des Patentanspruchs 1 ausgeht, ist ein Vegetationselement mit einem Saaten-Trägerkörper bekannt, und dieser Saaten-Trägerkörper enthält an örtlich voneinander getrennten Stellen Saatkörner oder Saatgut. Der Saaten-Trägerkörper ist dabei als eine Samenträgerplatte ausgebildet, die aus einem Gemisch aus Torf, Nährstoffen und synthetischem Material sowie als Beigabe aus flüssigen Schaumstoffkomponenten besteht, die als Bindemittel dienen. Dadurch ergibt sich insgesamt ein Gemisch von Bestandteilen für die Samenträgerplatte, die als eine steife Platte ausgebildet und mit Samen durchsetzt ist.

Bei dem bekannten Vegetationselement ist als eine zwingende Voraussetzung eine Drainageplatte als Grundschicht vorgesehen, und außerdem umfasst das Vegetationselement eine Substratplatte als eine Mittelschicht. Der Zweck des bekannten Vegetationselementes besteht darin, die Verwendung von irgendwelchen Filterschichten auszuschließen und eine künstliche Bewässerung des Vegetationselementes zu ermöglichen.

Wegen der Verteilung des Samens an örtlich voneinander getrennten Stellen innerhalb der Samenträgerplatte lässt sich zwar eine gleichmäßigere Begrünung erreichen, allerdings ist der Aufbau des bekannten Vegetationselementes wegen der insgesamt drei plattenförmigen Schichten als sehr aufwendig anzusehen. Außerdem ist es nachteilig, dass die Samenträgerplatte - ebenso wie die anderen beiden Platten - steif und formstabil sind. Es ist deshalb nicht möglich, das Vegetationselement aufzurollen. Ferner ist die Samenträgerplatte bei dem bekannten Vegetationselement auch nicht verrottbar.

Der Erfindung liegt die Aufgabe zugrunde, ein Vegetationselement mit einem eine gleichmäßige Begrünung ermöglichendem Saaten-Trägerkörper zu schaffen, wobei der Saaten-Trägerkörper einen einfachen Aufbau besitzt und trotzdem eine gleichmäßige Fixierung von Saatkörnern an bestimmten Stellen ermöglicht, und wobei sich der Saaten-Trägerkörper auf einfach Weise in den Gesamtaufbau des Vegetationselementes integrieren lässt, und wobei der Saaten-Trägerkörper von geringem Gewicht und flexibel ausgebildet ist.

Die Lösung dieser Aufgabe erfolgt durch die Merkmale des Patentanspruchs 1.

Durch die Erfindung werden zwei alternative Lösungswege aufgezeigt.

Bei der einen Alternative ist der Saaten-Trägerkörper durch eine zweischichtige Saatenmatte aus flexiblem verrottbarem Material gebildet, und die Saatenmatte besteht aus einer Unterschicht und einer damit verbundenen Oberschicht. Zwischen diesen beiden Schichten sind die Saatkörper angeordnet und durch die gegenseitige Verbindung der beiden Schichten fixiert und festgehalten, wobei die Unterschicht und die Oberschicht durch ein Vlies gebildet sind.

Bei der anderen Alternative umfasst die Saatenmatte ein unteres Trägervlies, auf welchem die Saatkörner angeordnet sind. Dabei ist das Trägervlies mit einem pflanzenverträglichen Klebstoff besprüht, wodurch die Saatkörner auf dem Trägervlies fixiert und festgehalten sind.

In beiden beschriebenen Alternativen ist das komplette Vegetationselement flexibel und zu einer Rolle aufrollbar.

Die Erfindung lässt sich sowohl bei vorkultivierten Vegetationselementen, die eine untere Trägerschicht aufweisen, als auch bei solchen Vegetationselementen anwenden, bei denen der Vegetationsträger direkt auf einem Dach oder dergleichen aufgelegt wird. In jedem dieser Fälle wird der Vorgang des Aussä ens von Saatkörnern in vorteilhafter Weise durch das Anbringen der neuartigen zweischichtigen Saatenmatte ersetzt.

Der flexible Aufbau des Vegetationselementes und die Möglichkeit des Aufrollens zu einer Rolle sind für eine Lagerung und auch für den Transport der Vegetationselemente von besonderem Vorteil.

In zweckmäßiger Weise wird die Saatenmatte oben auf dem Vegetationsträger angeordnet und mit dem Vegetationsträger verbunden, wobei es vorteilhaft ist, die Saatenmatte mechanisch an dem Vegetationsträger zu befestigen. Hierfür eignet sich beispielsweise eine Verbindung mit Fäden in Form von Kettelstichen.

In vorteilhafter Weise kann die Saatenmatte aber auch mit einem pflanzenverträglichen Kleber auf dem Vegetationsträger aufgeklebt werden.

Durch die Befestigung der Saatenmatte an dem Vegetationsträger wird der Gefahr begegnet, daß die Saatenmatte z. B. durch Einwirkung von Wind von dem Vegetationsträger abgehoben wird. Insbesondere auf hohen Dächern können nämlich große Windkräfte auftreten.

Eine weitere zweckmäßige Ausgestaltung der Erfindung besteht darin, die Befestigung der Saatenmatte auf dem Vegetationsträger dadurch vorzunehmen oder auch dadurch zu unterstützen, daß auf die Saatenmatte eine flächige Auflast aufgebracht wird, indem Kies oder auch grober Sand/Splitt als luftdurchlässige Schicht auf die Saatenmatte aufgebracht wird.

Eine andere zweckmäßige Ausgestaltung der Erfindung sieht vor, die Saatenmatte auf der unteren Seite des Vegetationsträgers anzuordnen. Auch bei dieser Variante ergibt sich eine gleichmäßige Begrünung des Vegetationselements, wobei die Pflanzen durch den Vegetationsträger nach oben wachsen.

In weiterer Ausgestaltung der Erfindung kann die Saatenmatte nicht nur oberhalb oder unterhalb, sondern auch innerhalb des Vegetationsträgers angeordnet sein. Dabei ist es vorteilhaft, den Vegetationsträger aus zwei separaten Schichten zu bilden, zwischen denen die Saatenmatte sandwichartig eingebettet ist.

In vorteilhafter Weise kann die Saatenmatte neben den Saatkörnern auch noch gleichmäßig verteilt Dünger enthalten, um den Wachstumsprozeß der Pflanzen zu beschleunigen.

Es ist darauf hinzuweisen, daß Saatenmatten an sich für die Anwendung im Gartenbereich bekannt sind. Dabei hat man sich jedoch darauf beschränkt, Saatenmatten mit kleinen Abmessungen einfach auf den natürlichen Gartenboden zu verlegen. Großflächige Anwendungen der Saatenmatte sind demgegenüber nicht bekannt und waren auch nicht durchführbar, weil es an Mitteln fehlte, die Saatenmatten auf der Oberfläche des Gartenbodens festzuhalten, und bei Vegetationselementen, die bahnförmig und in sehr großen Flächen verlegt werden, sind Saatenmatten bisher überhaupt nicht zum Einsatz gelangt.

Anhand der in der Zeichnung dargestellten Ausführungsbeispiele wird die Erfindung nachfolgend näher erläutert. Es zeigen:
- Fig. 1: Eine Querschnittsansicht eines Vegetationselements gemäß einer ersten Ausführungsform,
- Fig. 2: eine Querschnittsansicht eines Vegetationselements gemäß einer zweiten Ausführungsform,
- Fig. 3: eine Draufsicht einer Saatenmatte,
- Fig. 4: eine Querschnittsansicht einer Saatenmatte gemäß Fig. 3, und
- Fig. 5: eine Querschnittsansicht eines Vegetationselements gemäß einer weiteren Ausführungsform.

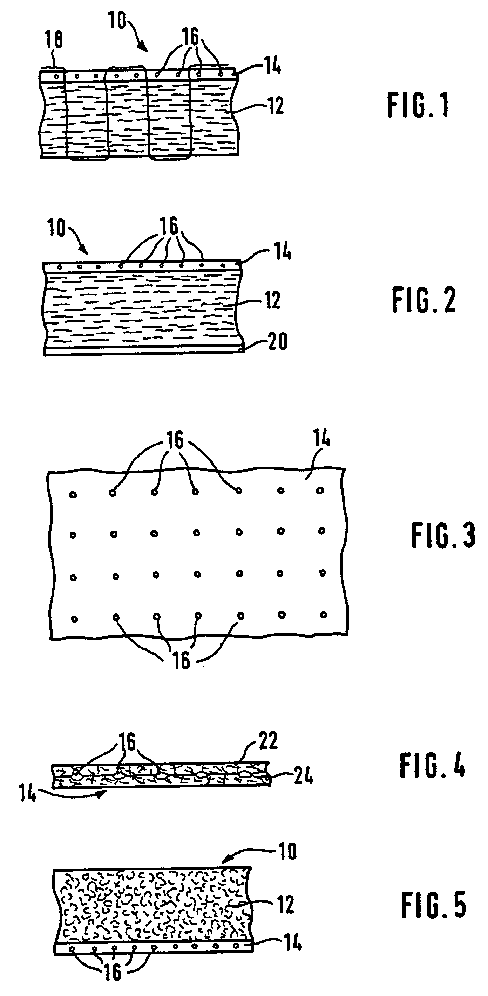

Das in Fig. 1 in teilweiser Querschnittsansicht dargestellte Ausführungsbeispiel eines Vegetationselementes 10 umfaßt einen Vegetationsträger 12, auf dessen Oberfläche sich eine Saatenmatte 14 befindet. Innerhalb dieser Saatenmatte 14 sind an wählbaren voneinander getrennten Stellen Saatkörner 16 fixiert und festgehalten. Der Aufbau einer Saatenmatte 14 wird weiter unten noch anhand von Fig. 3 und 4 näher beschrieben.

Der Vegetationsträger 12 kann aus einem mineralischen Material, beispielsweise hygroskopischer Steinwolle, bestehen. Die Saatenmatte 14 ist mechanisch mit Kettelstich durch Fäden 18 auf der Oberfläche des Vegetationsträgers 12 befestigt. Dabei verlaufen die Fäden einerseits auf der Oberfläche der Saatenmatte 14 bzw. auf der unteren Seite des Vegetationsträgers 16, und andererseits durchdringen die Fäden 18 das Vegetationselement 10. Diese Art der mechanischen Befestigung durch die Fäden 18 erfolgt mittels Kettelstich.

Bei einer anderen Ausführungsform des Vegetationselementes gemäß Fig.2 ist die untere Seite des Vegetationsträgers 12 mit einer Trägerschicht 20 verbunden, die aus einem wasserdurchlässigen Vlies oder einem grobmaschigen Gittergewebe besteht. Durch die Trägerschicht 20 wird in an sich bekannter Weise eine sichere Handhabung des Vegetationselementes 10 erreicht, welches zum Zwecke eines Transportes zu einer Rolle aufgerollt werden kann, um anschließend auf einem Dach oder dergleichen wieder ausgerollt und verlegt zu werden. Wie schon in Fig. 1 besitzt auch das Vegetationselement gemäß Fig. 2 auf seiner Oberfläche eine Saatenmatte 14 mit Saatkörnern 16. Zum Zwecke der Befestigung ist die Saatenmatte 14 mittels eines pflanzenverträglichen Klebers auf dem Vegetationsträger 12 aufgeklebt.

In Fig. 3 und Fig. 4 ist der Aufbau einer Saatenmatte 14 dargestellt. Die Draufsicht gemäß Fig. 3 zeigt, daß die fixierten und festgehaltenen Saatkörner 16 gleichmäßig verteilt angeordnet sind. Gemäß der Querschnittsansicht in Fig. 4 besteht die Saatenmatte 14 aus einer Oberschicht 22 und einer Unterschicht 24, die miteinander befestigt sind, und zwischen denen sich die Saatkörner 16 befinden. Die Oberschicht 22 und die Unterschicht 24 sind jeweils als dünne Vliesschichten ausgebildet.

Die Saatenmatte 14 kann auch dadurch hergestellt werden, daß auf einem unteren Trägervlies die Saatkörner angeordnet werden, und daß anschließend von oben her eine pflanzenverträgliche Klebeschicht aufgebracht wird, durch welche die Saatkörner fixiert und festgehalten werden, und welche dann die obere Schicht der Saatenmatte 14 bildet.

Daneben ist es auch möglich, auf einem unteren Trägervlies die Saatkörner anzuordnen und dann das Trägervlies mit den darauf befindlichen Saatkörnern anschließend mit einem pflanzenverträglichen Kleber zu besprühen, um die Saatkörner zu fixieren und festzuhalten.

Neben den Saatkörnern kann die Saatenmatte auch zusätzlich noch Dünger enthalten, der gleichmäßig verteilt angeordnet ist und sich bei der Ausführungsform gemäß Fig. 4 zusammen mit den Saatkörnern 16 zwischen der Oberschicht 22 und der Unterschicht 24 befindet.

Bei der in Fig. 5 dargestellten Ausführungsform eines Vegetationselementes 10 befindet sich die Saatenmatte 14 mit den Saatkörnern 16 auf der unteren Seite des Vegetationsträgers 12, der beispielsweise aus organischen Materialien wie Kokos, Flachs, Hanf, Baumwolle besteht. Diese Materialien sind verrottbar.

Im Rahmen der Erfindung sind vielfältige Abwandlungen des bisher beschriebenen Vegetationselementes möglich. Besonders hervorzuheben ist eine weitere Art der Sicherung der Saatenmatte auf der Oberfläche des Vegetationsträgers. So ist es möglich, auf die Saatenmatte eine luftdurchlässige Schicht von Kies oder auch groben Sand/Splitt aufzubringen, welche eine gleichmäßige Auflast bildet und die Saatenmatte davor schützt, durch Windkräfte abgehoben zu werden.

Aus Gründen des Brandschutzes wird man für den Vegetationsträger vorzugsweise mineralisches Material, wie hygroskopische Steinwolle, verwenden. Es ist aber auch denkbar, daß der Vegetationsträger aus einem Gemisch von mineralischen und organischen Materialien besteht.

## Patentansprüche

1. Vegetationselement für die Begrünung von künstlichen Flächen, insbesondere Dächern, oder von natürlichen Flächen, mit einem aus mineralischem und/oder organischem Material bestehenden Vegetationsträger für eine Vegetation sowie mit einem Saaten-Trägerkörper, welcher an örtlich voneinander getrennten Stellen Saatkörner oder Saatgut enthält und durch welchen die Saatkörner an bestimmten Stellen fixiert und festgehalten sind, wobei der Vegetationsträger mit dem Saaten-Trägerkörper verbunden ist, und gegebenenfalls mit einer unteren Trägerschicht, **dadurch gekennzeichnet, daß** der Saaten-Trägerkörper durch eine zweischichtige Saatenmatte (14) aus flexiblem verrottbarem Material gebildet ist, daß die Samenmatte (14) aus einer Unterschicht (24) und einer damit verbundenen Oberschicht (22) besteht, zwischen denen die Saatkörner angeordnet sind und durch die gegenseitige Verbindung der beiden Schichten (22, 24) fixiert und festgehalten sind, und daß die Unterschicht (24) und die Oberschicht (22) durch ein Vlies gebildet sind, oder daß die Saatenmatte (14) ein unteres Trägervlies umfaßt, auf dem die Saatkörner angeordnet sind, und daß das Trägervlies mit einem die Oberschicht bildenden pflanzenverträglichen Klebstoff besprüht ist, wodurch die Saatkörner auf dem Trägervlies fixiert und festgehalten sind, und daß das Vegetationselement (10) insgesamt flexibel und zu einer Rolle aufrollbar ist.

2. Vegetationselement nach Anspruch 1, **dadurch gekennzeichnet, daß** die Saatenmatte (14) oben auf dem Vegetationsträger (12) angeordnet und mit dem Vegetationsträger (12) verbunden ist.

3. Vegetationselement nach Anspruch 2, **dadurch gekennzeichnet, daß** die Saatenmatte (14) mechanisch an dem Vegetationsträger (12) befestigt ist.

4. Vegetationselement nach Anspruch 2, **dadurch gekennzeichnet, daß** die Saatenmatte (14) mit einem pflanzenverträglichen Kleber auf dem Vegetationsträger (12) aufgeklebt ist.

5. Vegetationselement nach Anspruch 1, **dadurch gekennzeichnet, daß** die Saatenmatte (14) oben auf dem Vegetationsträger angeordnet ist, und daß die Saatenmatte mit einer luftdurchlässigen Schicht als Auflast versehen ist.

6. Vegetationselement nach Anspruch 5, **dadurch gekennzeichnet, daß** die luftdurchlässige Schicht durch eine Kiesschicht gebildet ist.

7. Vegetationselement nach Anspruch 5, **dadurch gekennzeichnet, daß** die luftdurchlässige Schicht durch eine Sand-/Splittschicht gebildet ist.

8. Vegetationselement nach Anspruch 1, **dadurch gekennzeichnet, daß** die Saatenmatte (14) auf der unteren Seite des Vegetationsträgers (12) angeordnet ist.

9. Vegetationselement nach Anspruch 8, **dadurch gekennzeichnet, daß** die Saatenmatte (14) mechanisch oder mittels eines pflanzenverträglichen Klebers mit dem Vegetationsträger (12) verbunden ist.

10. Vegetationselement nach Anspruch 1, **dadurch gekennzeichnet, daß** die Saatenmatte innerhalb des Vegetationsträgers (12) angeordnet ist.

11. Vegetationselement nach Anspruch 10, **dadurch gekennzeichnet, daß** der Vegetationsträger (12) aus zwei einzelnen Schichten gebildet ist, zwischen denen sich die Saatenmatte sandwichartig befindet.

12. Vegetationselement nach einem der vorhergehenden Ansprüche 1 - 11, **dadurch gekennzeichnet, daß** die Saatenmatte (14) neben den Saatkörnern (16) auch Dünger enthält.

13. Vegetationselement nach Anspruch 12, **dadurch gekennzeichnet, daß** der Dünger gleichmäßig verteilt in oder auf der Saatenmatte (14) angeordnet ist.

## Claims

1. A vegetation element for planting greenery on artificial surfaces, in particular roofs, or natural surfaces, having a vegetation support for vegetation consisting of inorganic and/or organic material and a seed carrier, which contains seed grains or seeds at spatially separate locations and by means of which the seed grains are fixed and secured at certain points, the vegetation support being connected with the seed carrier, and optionally having a lower backing, **characterised in that** the seed carrier takes the form of a two-layer seed mat (14) of flexible, decomposable material, **in that** the seed mat (14) consists of a lower layer (24) and an upper layer (22) connected therewith, between which the seed grains are arranged and fixed and secured by the mutual connection of the two layers (22, 24), and **in that** the lower layer (24) and the upper layer (22) take the form of a nonwoven, or **in that** the seed mat (14) comprises a lower supporting nonwoven, on which the seed grains are arranged, and **in that** the supporting nonwoven is sprayed with a plant-compatible adhesive forming the upper layer, whereby the seed grains are fixed and secured to the supporting nonwoven, and **in that** the vegetation element (10) is flexible overall and may be rolled up into a roll.

2. A vegetation element according to claim 1, **characterised in that** the seed mat (14) is arranged on top of the vegetation support (12) and connected with the vegetation support (12).

3. A vegetation element according to claim 2, **characterised in that** the seed mat (14) is attached mechanically to the vegetation support (12).

4. A vegetation element according to claim 2, **characterised in that** the seed mat (14) is adhered with a plant-compatible adhesive to the vegetation support (12).

5. A vegetation element according to claim 1, **characterised in that** the seed mat (14) is arranged on top of the vegetation support and **in that** the seed mat is provided with an air-permeable layer as loading-down means.

6. A vegetation element according to claim 5, **characterised in that** the air-permeable layer takes the form of a gravel layer.

7. A vegetation element according to claim 5, **characterised in that** the air-permeable layer takes the form of a sand/chippings layer.

8. A vegetation element according to claim 1, **characterised in that** the seed mat (14) is arranged on the underside of the vegetation support (12).

9. A vegetation element according to claim 8, **characterised in that** the seed mat (14) is connected to the vegetation support (12) mechanically or by means of a plant-compatible adhesive.

10. A vegetation element according to claim 1, **characterised in that** the seed mat is arranged inside the vegetation support (12).

11. A vegetation element according to claim 10, **characterised in that** the vegetation support (12) takes the form of two individual layers, between which the seed mat is located in the manner of a sandwich.

12. A vegetation element according to one of preceding claims 1 - 11, **characterised in that** the seed mat (14) contains fertiliser as well as seed grains (16).

13. A vegetation element according to claim 12, **characterised in that** the fertiliser is distributed in or on the seed mat (14).

## Revendications

1. Elément de végétation pour le gazonnement de surfaces artificielles, en particulier de toitures, ou de surfaces naturelles, comprenant un support de végétation en matière minérale et/ou organique pour la végétation, ainsi qu'un corps porteur de semences, dont des zones localement séparées les unes des autres contiennent des graines ou des semences, grâce auquel les graines sont fixées et maintenues dans des zones déterminées, le support de végétation étant relié au corps porteur de semences et, le cas échéant, à une couche porteuse inférieure, **caractérisé en ce que** le corps porteur de semences est formé par une natte pour semences à deux couches (14), constituée d'une matière souple et périssable, que la natte pour semences (14) est composée d'une couche inférieure (24), à laquelle est reliée une couche supérieure (22), entre lesquelles les graines sont disposées et fixées et maintenues grâce à la liaison réciproque des deux couches (22, 24), que la couche inférieure (24) et la couche supérieure (22) sont formées par une matière non-tissée ou que la natte pour semences (14) comprend un non-tissé porteur inférieur, sur lequel sont disposées les graines, et que le non-tissé porteur est pulvérisé d'une colle, compatible avec les plantes formant la couche supérieure, qui fixe et maintient les semences sur le non-tissé porteur, et **en ce que**, dans l'ensemble, l'élément de végétation (10) est souple et peut être enroulé.

2. Elément de végétation suivant la revendication 1, **caractérisé en ce que** la natte pour semences (14) est disposée sur le support de végétation (12), auquel elle est reliée.

3. Elément de végétation suivant la revendication 2, **caractérisé en ce que** la natte pour semences (14) est fixée mécaniquement sur le support de végétation (12).

4. Elément de végétation suivant la revendication 2, **caractérisé en ce que** la natte pour semences (14) est collée sur le support de végétation (12) au moyen d'une colle compatible avec les plantes.

5. Elément de végétation suivant la revendication 1, **caractérisé en ce que** la natte pour semences (14) est disposée sur le dessus du support de végétation et qu'elle est pourvue d'une couche perméable à l'air servant de surcharge.

6. Elément de végétation suivant la revendication 5, **caractérisé en ce que** la couche perméable à l'air est formée par une couche de gravier.

7. Elément de végétation suivant la revendication 5, **caractérisé en ce que** la couche perméable à l'air est formée par une couche de sable/gravillons.

8. Elément de végétation suivant la revendication 1, **caractérisé en ce que** la natte pour semences (14) est disposée sur le dessous du corps de végétation (12).

9. Elément de végétation suivant la revendication 8, **caractérisé en ce que** la natte pour semences (14) est reliée au support de végétation (12) mécaniquement ou au moyen d'une colle compatible avec les plantes.

10. Elément de végétation suivant la revendication 1, **caractérisé en ce que** la natte pour semences est disposée à l'intérieur du support de végétation (12).

11. Elément de végétation suivant la revendication 10, **caractérisé en ce que** le support de végétation (12) est formé, à la manière d'un sandwich, de deux couches séparées, entre lesquelles se trouve la natte pour semences.

12. Elément de végétation suivant une des revendications 1 à 11, **caractérisé en ce que** la natte pour semences (14) contient non seulement des graines (16), mais aussi de l'engrais.

13. Elément de végétation suivant la revendication 12, **caractérisé en ce que** l'engrais est réparti uniformément dans ou sur la natte pour semences (14).
